Europäisches Patentamt

European Patent Office

Office européen des brevets

(11) Numéro de publication : **0 470 909 B1**

(12) **FASCICULE DE BREVET EUROPEEN**

(45) Date de publication du fascicule du brevet :
**14.12.94 Bulletin 94/50**

(51) Int. Cl.$^5$ : **G01T 1/164**

(21) Numéro de dépôt : **91402207.4**

(22) Date de dépôt : **08.08.91**

(54) **Appareil de détection nucléaire, notamment du genre gamma-caméra, à filtres de déconvolution.**

(30) Priorité : **10.08.90 FR 9010257**

(43) Date de publication de la demande :
**12.02.92 Bulletin 92/07**

(45) Mention de la délivrance du brevet :
**14.12.94 Bulletin 94/50**

(84) Etats contractants désignés :
**DE GB NL**

(56) Documents cités :
**EP-A- 0 252 566**
**FR-A- 2 615 961**

(72) Inventeur : **Tournier, Edmond**
**2 Square Léon Martin**
**F-38000 Grenoble (FR)**
Inventeur : **Chaillout, Jean-Jacques**
**Lotissement Le Montagner Haut**
**F-38960 Saint Etienne de Crossey (FR)**
Inventeur : **Mestais, Corinne**
**Le Prieuré - Bernin**
**F-38190 Brignoud (FR)**

(74) Mandataire : **Mongrédien, André et al**
**c/o BREVATOME**
**25, rue de Ponthieu**
**F-75008 Paris (FR)**

(73) Titulaire : **COMMISSARIAT A L'ENERGIE**
**ATOMIQUE**
**31/33, rue de la Fédération**
**F-75015 Paris Cédex 15 (FR)**

# Description

La présente invention a pour objet un appareil de détection nucléaire, notamment du genre gamma-caméra. Elle trouve une application en physique nucléaire, lorsqu'il s'agit de détecter un rayonnement nucléaire et d'en mesurer, par exemple, le spectre d'énergie ou en médecine nucléaire où les gamma-caméras sont utilisées pour produire des images d'organes dans lesquels un isotope radioactif a été introduit.

Bien que l'invention ne se limite pas aux gamma-caméras, c'est ce type d'appareil qui sera pris comme exemple pour exposer l'état de la technique et ses inconvénients. Le brevet américain US-A-3 011 057, délivré à H.O. ANGER, décrit la structure générale et le fonctionnement de ces appareils.

Une gamma-caméra comprend généralement un collimateur, pour limiter l'angle d'incidence des photons gamma émis par l'organe, un cristal scintillateur, pour transformer les photons gamma en photons lumineux, un ensemble de tubes photomultiplicateurs, pour transformer les photons lumineux en impulsions électriques et des moyens électroniques, pour transformer ces impulsions électriques en signaux de coordonnées X et Y.

Une gamma-caméra comprend encore un ensemble de visualisation, généralement à oscilloscope cathodique, commandé par les signaux de coordonnées X, Y. Cet ensemble visualise le point d'impact du photon gamma sur le cristal. Il peut éventuellement comporter un dispositif photographique pour former une image de l'organe observé par intégration d'un grand nombre de points lumineux. Il peut, par ailleurs, comprendre un dispositif de traitement numérique des images. En particulier, le dispositif de traitement numérique d'images peut être utilisé pour reconstruire des images de coupes de l'organe examiné, afin de produire des tomographies de ces organes. Dans ce dernier cas, des algorithmes de reconstruction d'images identiques à ceux utilisés en tomodensitométrie sont mis en oeuvre.

La figure 1 annexée montre, à titre d'exemple, une gamma-caméra telle que décrite dans le document FR-A-2 615 961.

Les photons gamma (γ) à détecter et à localiser sont émis par un organe 1. La caméra proprement dite comprend :

- un collimateur 2 exposé au rayonnement gamma,
- une couche 3 de matériau scintillateur apte à recevoir le rayonnement gamma collimaté et à produire, par scintillation (s), un rayonnement lumineux I,
- un ensemble de tubes photomultiplicateurs 6 disposés en regard du scintillateur, chaque tube délivrant un signal électrique de forme impulsionnelle en réponse au rayonnement lumineux qu'il a reçu,
- des jeux de résistances de pondération 7 recevant les signaux électriques délivrés par les tubes photomultiplicateurs 6 et délivrant quatre signaux électriques analogiques x⁺, x⁻, y⁺ et y⁻ dits "impulsions pondérées", les deux signaux x⁺, x⁻ traduisant la position de la scintillation par rapport à un premier axe X, et les deux signaux y⁺, y⁻ traduisant cette position par rapport à un second axe Y,
- des circuits 8 de transmission des signaux analogiques x⁺, x⁻, y⁺, y⁻ comprenant, par exemple, un amplificateur à gain variable, une ligne à retard et un circuit de restauration de potentiel de base,
- des intégrateurs 10 des signaux impulsionnels, ces intégrateurs délivrant des signaux pondérés X⁺, X⁻, Y⁺, Y⁻,
- des moyens de calcul 20 aptes à calculer, à partir des signaux pondérés, les coordonnées X, Y d'un point d'affichage correspondant au point de scintillation (s) sur le matériau scintillateur ; par exemple, conformément au document US-A-4 672 542, les moyens 20 calculent les quantités

$$X = \frac{X^+ - X^-}{X^+ + X^-}$$

et

$$Y = \frac{Y^+ - Y^-}{Y^+ + Y^-}$$

- un afficheur 22 comprenant, par exemple, un oscilloscope à rayons cathodiques et ses plaques de déviation horizontale et verticale.

La gamma-caméra illustrée comprend également un circuit 19 relié à l'ensemble de résistances de pondération et qui délivre un signal e reflètant l'énergie totale de l'impulsion de rayonnement lumineux (et non plus la position de ce rayonnement). Après passage dans un intégrateur 27, on obtient un signal E reflétant l'énergie intégrée. Un comparateur à seuil 28 délivre un signal de validation V servant à commander les moyens de calcul 20.

Il est possible également d'extraire du circuit 19 un signal d'autorisation d'intégration I appliqué aux intégrateurs 10, lorsque l'énergie détectée tombe dans une bande requise.

Entre autres qualités, une gamma-caméra doit posséder :

- une bonne résolution spatiale, c'est-à-dire une capacité à distinguer de petites sources rapprochées,
- une bonne réponse en taux de comptage, c'est-à-dire une capacité à traiter un grand nombre d'événements par unité de temps,
- une qualité d'image indépendante de l'énergie du rayonnement gamma émis par l'isotope considéré.

La résolution spatiale dépend de la précision de calcul des coordonnées X et Y. Cette précision dépend à son tour essentiellement des lois physiques régissant le fonctionnement des différents moyens de la gamma-caméra. Ainsi, l'interaction d'un photon gamma avec le cristal scintillateur donne naissance à une scintillation dont l'intensité décroît exponentiellement avec le temps. La constante de temps de cette décroissance est caractéristique du cristal utilisé. Pour un cristal d'iodure de sodium activé au thallium (NaI, Tl), elle est de l'ordre de 300 nanosecondes. Cette scintillation est vue par plusieurs tubes photomultiplicateurs, simultanément. A une énergie donnée du photon gamma incident, le nombre de photons lumineux composant la scintillation obéit à la statistique de POISSON. Les photons lumineux arrachent des photoélectrons aux photocathodes des tubes photomultiplicateurs. Le nombre de photoélectrons arrachés obéit aussi, pour une scintillation donnée, à la loi statistique de POISSON. La contribution électrique d'un tube photomultiplicateur suit donc elle-même une distribution statistique de POISSON. La valeur moyenne de cette amplitude est fonction de l'énergie des photons lumineux incidents.

La détermination de l'emplacement de la scintillation (elle-même représentative du lieu d'émission du photon gamma dans l'organe observé) est obtenue en calculant le barycentre des contributions électriques délivrées par l'ensemble des tubes photomultiplicateurs.

Le problème le plus difficile à résoudre consiste, pour une scintillation donnée, à déterminer le plus exactement possible l'intégrale du barycentre des contributions électriques sur une période d'environ trois fois la constante de temps de décroissance des scintillations. La durée d'intégration dépend de la constante de temps du cristal. La précision de la mesure est entachée d'erreurs dues à la fluctuation statistique de POISSON. En effet, l'écart type de la fluctuation de l'amplitude des contributions, selon la statistique de POISSON, est inversement proportionnel à la racine carrée du nombre de photoélectrons arrachés. Ainsi, plus l'intégration est longue, jusqu'à trois fois la constante de temps de décroissance de la scintillation, plus le nombre de photoélectrons pris en compte est important, plus l'écart type est faible, et donc meilleure est l'appréciation de la valeur moyenne de cette contribution.

On notera au passage que la durée d'intégration est directement liée à la qualité de la résolution spatiale de la gamma-caméra et que cette qualité s'obtient au détriment du taux de comptage, c'est-à-dire au détriment du nombre d'événements pris en compte par seconde.

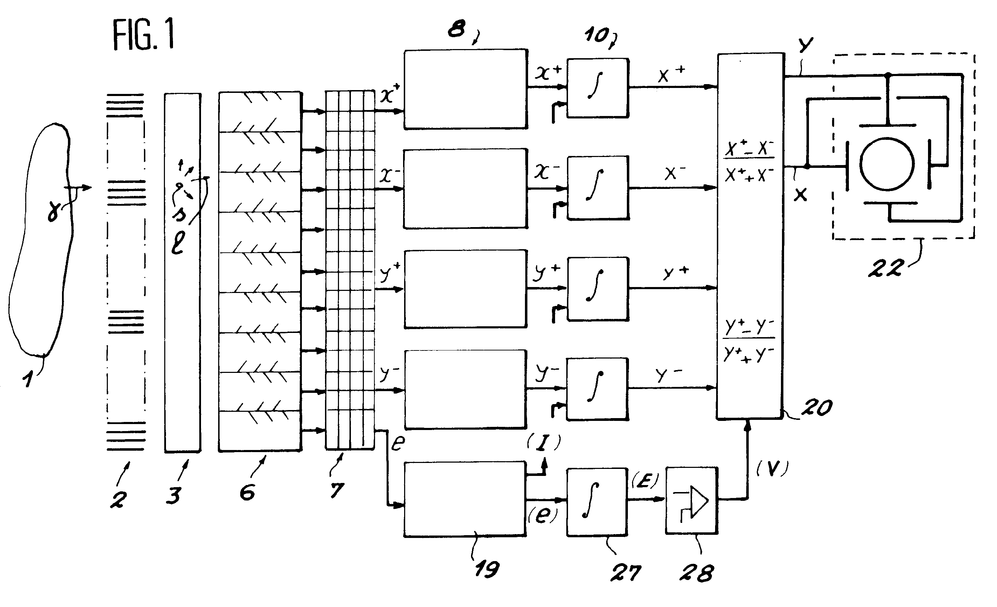

Dans beaucoup de gamma-caméras, l'intégration des signaux est réalisée de manière analogique, comme illustré sur la figure 1. Lorsque plusieurs photons gamma sont reçus pendant la durée d'intégration, ils se trouvent "empilés", c'est-à-dire que les impulsions électriques qui leur correspondent se superposent, ce qui nuit à la résolution spatiale de la caméra. On doit donc rejeter les impulsions empilées ou superposées.

Un certain nombre de solutions ont été proposées pour rejeter ces impulsions empilées.

Dans le document US-A-4 629 895, il est décrit un dispositif comportant, en plus des circuits servant à la localisation des scintillations, des circuits de validation pour prendre en compte des scintillations dont l'amplitude se situe dans une gamme prédéterminée, et quine sont pas suivies, pendant la durée d'intégration, d'une autre scintillation, éventuellement produite en un autre endroit du cristal, et dont l'intervention risquerait de fausser le calcul de la localisation.

Dans le document US-A-4 882 680, il est décrit un dispositif de rejet d'impulsions empilées lorsque l'intégrale de l'énergie dépasse un certain seuil indiquant qu'il y a eu empilement pendant la durée d'interprétation.

D'autres dispositifs utilisent diverses astuces pour soustraire des "traînées" d'impulsions extrapolées ou simulées, comme décrit par exemple dans les documents US-A-4 618 775 et US-A-4 612 443.

On peut aussi utiliser un dispositif de troncature des signaux, comme décrit dans le document US-A-4 455 616.

Enfin, certains dispositifs utilisent des circuits de correction de temps mort comme décrit par exemple dans les documents US-A-4 198 986, US-A-4 369 495 et US-A-549 866.

Toutes ces solutions ne sont pas satisfaisantes car, soit elles rejettent des signaux et dégradent ainsi la performance en taux de comptage, soit elles soustraient des "traînées" extrapolées ou théoriques ou tronquent les impulsions, et conduisent alors à une dégradation de la résolution spatiale.

Le but de la présente invention est de remédier à ces inconvénients en proposant des moyens permettant de séparer les impulsions empilées et de calculer leur intégrale de façon précise, donc d'améliorer le taux de comptage sans dégrader la résolution spatiale.

Selon l'invention, considérant que les signaux électriques $x^+$, $x^-$, $y^+$, $y^-$, résultent, en fait, d'une convolution entre l'impulsion gamma incidente et la fonction de transfert de tous les moyens contribuant à former les signaux électriques correspondant, on opère d'abord une déconvolution de ces signaux en les faisant transiter par un filtre ayant comme fonction de transfert l'inverse de la fonction de transfert desdits moyens. Cette déconvolution aura pour effet de séparer les impulsions empilées. L'intégration s'effectuera ensuite, sur les impulsions séparées.

Toutes ces opérations, de filtrage et d'intégration, s'effectuent en numérique, ce qui implique que les signaux à traiter soient d'abord convertis en numérique par des convertisseurs analogique-numérique. La conversion peut se faire après les résistances de pondération lorsqu'elles existent ou même avant, dans le cas où les signaux délivrés par les photomultiplicateurs sont directement codés en numérique pour un traitement numérique destiné à trouver le barycentre.

Dans les appareils de détection nucléaire qui ne sont pas des gamma-caméras, les inconvénients sont les mêmes, à savoir que les impulsions à traiter s'empilent, ce qui nuit à la précision de la mesure. L'établissement d'histogrammes, par exemple, manque alors de précision.

De façon plus précise, la présente invention a pour objet un appareil de détection nucléaire comprenant des moyens de détection d'un rayonnement nucléaire délivrant des signaux électriques impulsionnels, des moyens de traitement de ces signaux électriques impulsionnels pour déterminer une caractéristique du rayonnement nucléaire reçu, cet appareil étant caractérisé par le fait que les moyens de traitement comprennent un convertisseur analogique-numérique rapide capable d'échantillonner chaque impulsion en plusieurs points, suivi d'un moyen de filtrage numérique ayant une fonction de transfert qui est sensiblement l'inverse de la fonction de transfert des moyens à l'origine du signal que ce moyen de filtrage reçoit, ce moyen de filtrage étant suivi de moyens d'intégration numérique et de moyens pour déterminer ladite caractéristique du rayonnement.

Comme déjà indiqué, cet appareil de détection nucléaire peut être de type quelconque. Il peut s'agir par exemple d'un appareil destiné à analyser la répartition en énergie d'un rayonnement nucléaire (spectromètre délivrant des histogrammes).

Cependant, l'invention trouve une application privilégiée dans le perfectionnement des gamma caméras.

De préférence, dans cette variante, la gamma caméra comprend une couche de matériau scintillateur apte à recevoir un rayonnement gamma et à produire par scintillation un rayonnement lumineux, des moyens de photodétection disposés en regard de la couche de scintillateur et délivrant lesdits signaux électriques, les moyens d'intégration numérique étant suivis d'un circuit de calcul de la position de la scintillation.

De préférence encore, les moyens de traitement comprennent des jeux de résistances de pondération recevant les signaux électriques délivrés par les moyens de photodétection et délivrant quatre signaux électriques $x^+$, $x^-$, $y^+$, $y^-$ de forme impulsionnelle, les deux signaux $x^+$, $x^-$ traduisant la position de la scintillation par rapport à un premier axe X, et les deux signaux $y^+$, $y^-$ traduisant la position de la scintillation par rapport à un second axe Y.

De manière avantageuse, les moyens de photodétection sont des photomultiplicateurs et la gamma caméra comprend en outre un collimateur de rayonnement gamma placé devant la couche de matériau scintillateur.

De toute façon, les caractéristiques et avantages de l'invention apparaîtront mieux à la lumière de la description qui va suivre. Cette description porte sur des exemples de réalisation donnés à titre explicatif et nullement limitatif et elle se réfère à des dessins annexés sur lesquels :

- la figure 1, déjà décrite, montre une gamma-caméra selon l'art antérieur ;
- la figure 2 illustre le principe à la base de l'invention appliqué aux gamma caméras ;
- la figure 3 montre une réponse impulsionnelle, sa transformée de FOURIER et la transformée inverse ;
- la figure 4 montre une fonction de transfert inverse ;
- la figure 5 montre un mode de réalisation d'une gamma-caméra conforme à l'invention ;
- la figure 6 montre un signal incident, le signal filtré correspondant et le signal intégré,
- la figure 7 montre deux spectres d'énergie de signaux sans empilement, avant et après filtrage,
- la figure 8 montre deux spectres d'énergie de signaux avec empilement, avant et après filtrage.

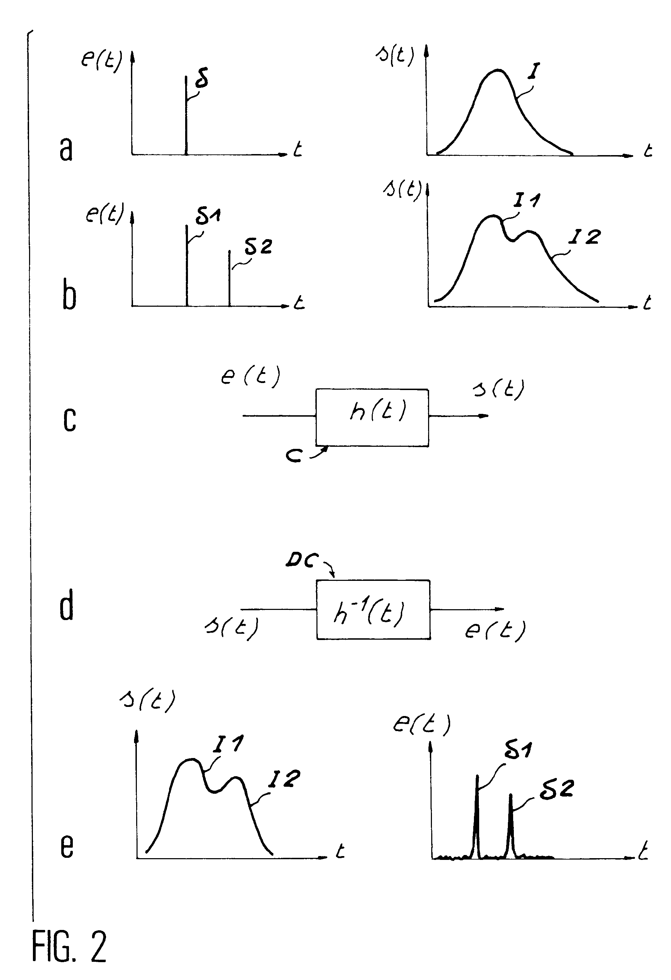

Sur la figure 2, ligne (a) partie gauche, on voit une impulsion $\delta$ représentant un photon gamma bombardant un scintillateur. L'amplitude de cette impulsion représente l'énergie du photon et sa largeur, la durée du phénomène. Bien que cette durée ne soit pas rigoureusement nulle et que l'amplitude ne soit pas rigoureusement infinie, on peut assimiler cette impulsion à une impulsion de DIRAC.

Cette impulsion déclenche une cascade de phénomènes à travers le scintillateur, les tubes photomultiplicateurs, les résistances, les canaux de transmission et donne naissance finalement à un signal ayant la forme d'une impulsion I relativement étalée (partie droite de la ligne (a)).

Sur la ligne $\underline{b}$ de cette même figure 2, sont représentées deux impulsions de DIRAC $\delta1$ et $\delta2$ qui donnent naissance, de la même manière, à deux impulsions I1 et I2. La figure correspond au cas où les deux impulsions $\delta1$ et $\delta2$ sont suffisamment rapprochées pour que les deux impulsions I1 et I2 se chevauchent en partie ce qui conduit à un signal déformé -à "empilement" selon la terminologie habituelle-qui est à l'origine des difficultés soulignées plus haut.

La ligne $\underline{c}$ résume ces phénomènes d'une manière synthétique en considérant que la chaîne de moyens allant du cristal scintillateur à la sortie des circuits de transmission peut être représentée par un unique circuit C ayant une fonction de transfert h(t). On peut dire que le signal de sortie s(t) est le produit de convolution d'un signal incident e(t) et de la fonction de transfert h(t). On a donc :

$$s(t) = e(t) * h(t)$$

où le signe * représente un produit de convolution.

Pour fixer les ordres de grandeur, il peut être indiqué que les signaux s(t) rencontrés dans la plupart des gamma-caméras ont une durée de l'ordre de la microseconde.

Selon l'invention, au lieu de traiter les signaux s(t) tels qu'ils apparaissent sur les lignes a et/ou b on leur fait subir préalablement une opération de déconvolution qui est schématisée sur la ligne d. Pour cela, on fait transiter ces signaux par un circuit de déconvolution DC, dont la fonction de transfert est l'inverse de la fonction de transfert h(t), soit $h^{-1}(t)$.

Alors, un signal composé tel que celui de la ligne e, résultat de la superposition de deux impulsions I1 et I2, sera redécomposé en deux impulsions $\delta 1$ et $\delta 2$, séparées l'une de l'autre. Ce sont ces impulsions séparées que l'on traitera par intégration, puis par calcul. A titre explicatif, on pourra séparer des impulsions empilées présentant un décalage de 600 ns.

Ainsi, toutes les impulsions seront-elles prises en compte, sans qu'il en résulte de dégradation pour la résolution spatiale.

Le calcul de la fonction de transfert inverse $h^{-1}(t)$ résulte de considérations classiques en traitement de signal. Sachant que la transformée de FOURIER d'un produit de convolution est le produit des transformées de FOURIER, on peut écrire :

$$S(f) = E(f) \times H(f)$$

où S(f), E(f) et H(f) sont respectivement les transformées de FOURIER de s(t), e(t) et h(t) et où le signe x représente l'opération de multiplication habituelle.

On a donc E(f) = S(f)x1/H(f).

Repassant au produit de convolution, on a :

$$e(t) = s(t) * TF^{-1}(1/H(f))$$

où $TF^{-1}$ représente l'opération transformée de FOURIER inverse.

Ainsi, la fonction de transfert inverse $h^{-1}(t)$ que l'on recherche est-elle égale à la transformée de FOURIER inverse de l'inverse de la transformée de FOURIER de la fonction de transfert initiale :

$$h^{-1}(t) = TF^{-1}(1/H(f)).$$

La convolution du signal s(t) par $h^{-1}(t)$ redonnera donc le signal initial e(t) :

$$e(t) = s(t) * h^{-1}(t).$$

Connaissant la fonction de transfert $h^{-1}(t)$, l'homme du métier sait réaliser un filtre numérique ayant les coefficients appropriés.

En pratique, on pourra raffiner ce filtre en l'apodisant. Cette opération s'effectue en multipliant 1/H(f) par une fonction ayant une valeur proche de l'unité pour les basses et moyennes fréquences et proche de zéro pour les hautes fréquences. On supprime ainsi les hautes fréquences généralement véhiculées par le bruit électronique.

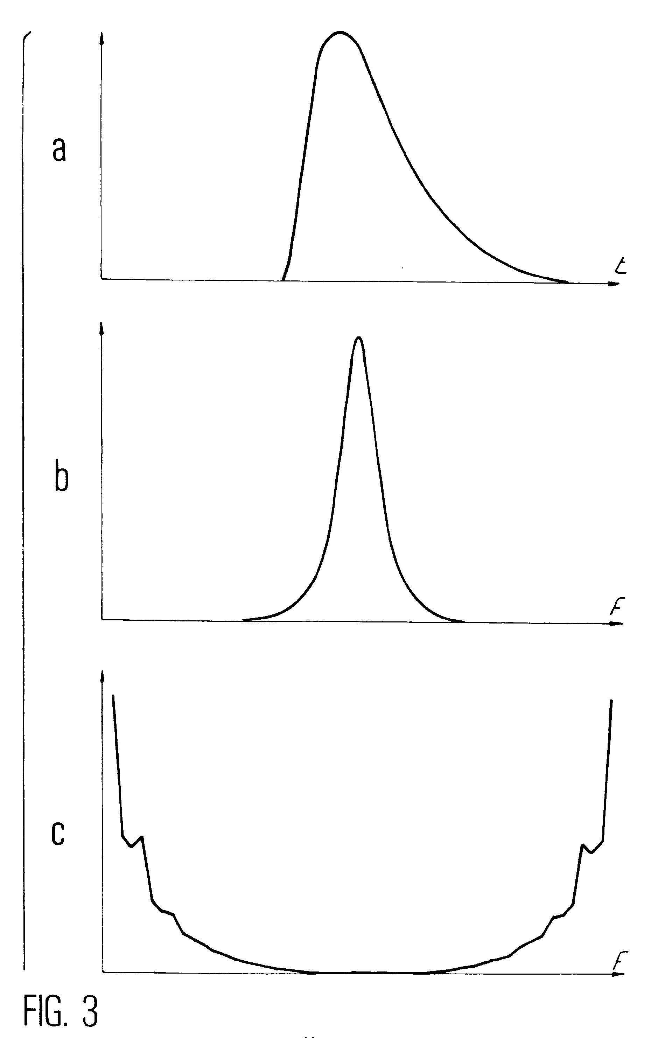

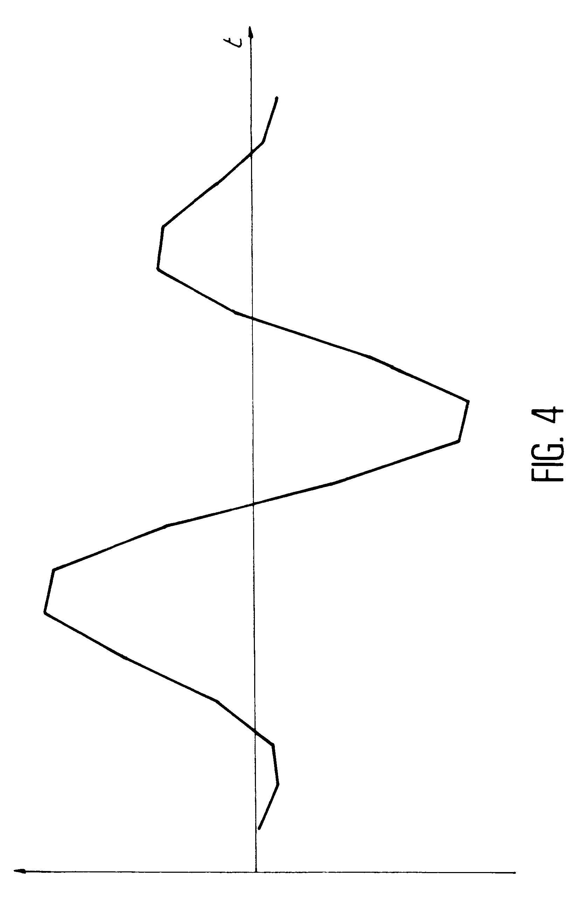

Par simulation des signaux apparaissant en divers points des circuits d'une gamma-caméra, les inventeurs ont pu déterminer les diverses fonctions mises en jeu dans l'invention, fonctions qui sont illustrées sur les figures 3 et 4.

Sur la figure 3, tout d'abord, on voit, sur la partie a, une fonction de transfert h(t) qui traduit la réponse impulsionnelle des circuits d'une gamma-caméra (scintillateur, photomultiplicateur, résistances, transmission).

Sur la partie b, est représentée la transformée de FOURIER H(f) correspondante.

Sur la partie c, est représentée l'inverse 1/H(f).

Sur la figure 4, est représentée une transformée de FOURIER inverse de 1/H(f) soit $h^{-1}(t)$, qui est une fonction de transfert du filtre recherché.

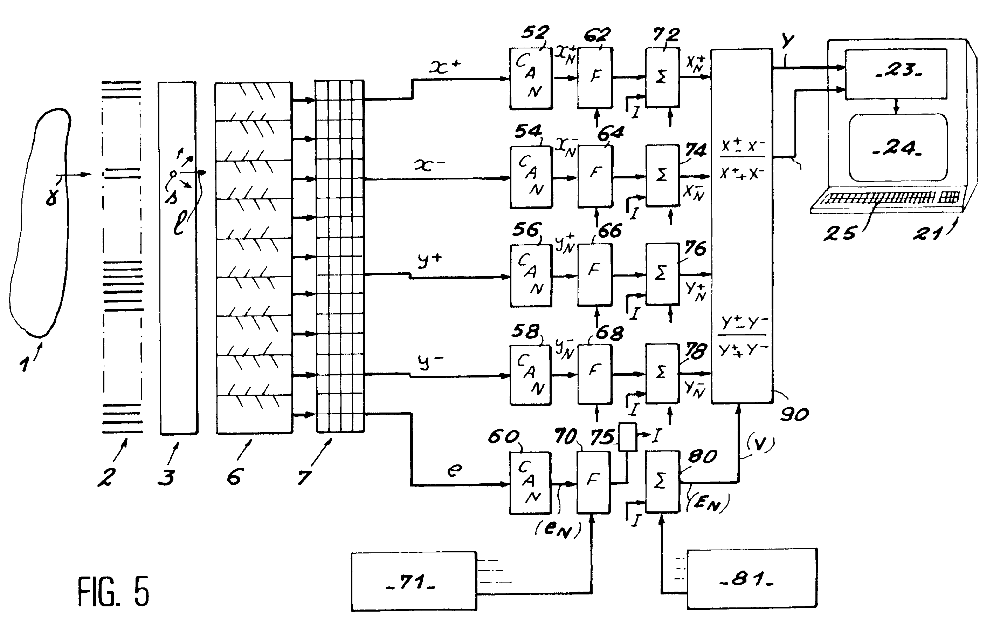

Une gamma-caméra conforme à l'invention se présente alors comme illustré sur la figure 5. Elle comprend tout d'abord des moyens connus déjà illustrés sur la figure 1, à savoir le collimateur 2, le scintillateur 3, les tubes photomultiplicateurs 6, les réseaux de résistances et les circuits délivrant des signaux $x^+$, $x^-$, $y^+$ et $y^-$ (référence 7). Conformément à l'invention, la gamma-caméra comprend en outre quatre convertisseurs analogique-numérique (CAN) rapides référencés 52, 54, 56, 58 (ou un seul convertisseur à quatre entrées et quatre sorties, ce qui est équivalent), et quatre filtres numériques (F) référencés 62, 64, 66, 68 (ou un seul filtre à quatre entrées) dont les fonctions de transfert $h^{-1}(t)$ sont conformes à ce qui a été dit plus haut. Ces filtres sont suivis d'intégrateurs numériques ($\Sigma$) référencés 72, 74, 76, 78 qui délivrent des sommes $X_N^+$, $X_N^-$, $Y_N^+$, $Y_N^-$.

Les coefficients des filtres numériques 62, 64, 66 et 68 peuvent être mémorisés dans une mémoire 71 tandis que les coefficients des intégrateurs sont mémorisés dans une mémoire 81.

Les sommes délivrées par les intégrateurs sont adressées à un moyen de calcul 90, qui détermine les coordonnées X et Y, par exemple (mais non exclusivement) par les formules connues :

$$X = \frac{X_N^+ - X_N^-}{X_N^+ + X_N^-}$$

et

$$Y = \frac{Y_N^+ - Y_N^-}{Y_N^+ + Y_N^-}$$

Ces coordonnées sont finalement appliquées à l'organe de visualisation 21. Cet organe peut comprendre une mémoire d'image 23, un écran d'affichage 24 et un clavier 25.

Le calcul des coordonnées X et Y à partir des sommes $X_N^+$, $X_N^-$, $Y_N^+$, $Y_N^-$ peut s'effectuer comme décrit dans le document US-A-4 672 542.

Comme dans le cas de la figure 1 relative à l'art antérieur, la gamma-caméra de l'invention peut comprendre en outre un circuit pour former un signal e reflétant l'énergie du rayonnement. Cependant, dans le cas de l'invention, le signal analogique e est converti en numérique $e_N$ par un convertisseur 60 et filtré ; le maximum de l'amplitude est détecté par un circuit 75, afin de valider le calcul d'intégration des coordonnées et de l'énergie (signal I). L'énergie est ensuite intégrée dans un intégrateur numérique 80. La somme obtenue ($E_N$) est utilisée comme signal de validation V de l'organe de calcul 90.

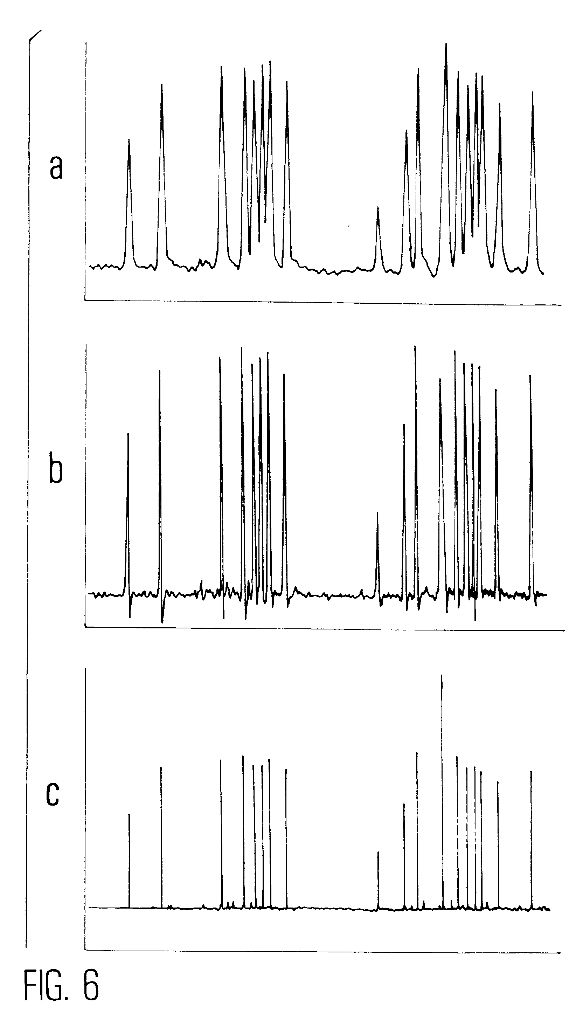

La figure 6 permet d'apprécier les résultats obtenus par les moyens de l'invention. Sur la ligne (a), on voit un signal numérisé incident. Les impulsions analogiques ayant par exemple une durée de 1μs, les convertisseurs rapides échantillonnent ces impulsions toutes les 50ns et fournissent donc environ une vingtaine d'échantillons numériques par impulsion. Ces échantillons sont lissés sur la ligne (a). Sur la ligne (b), on voit le signal correspondant obtenu après filtrage et sur la ligne (c) le signal après intégration. On voit que les impulsions qui se chevauchaient sur la ligne (a) sont séparées sur la ligne (c).

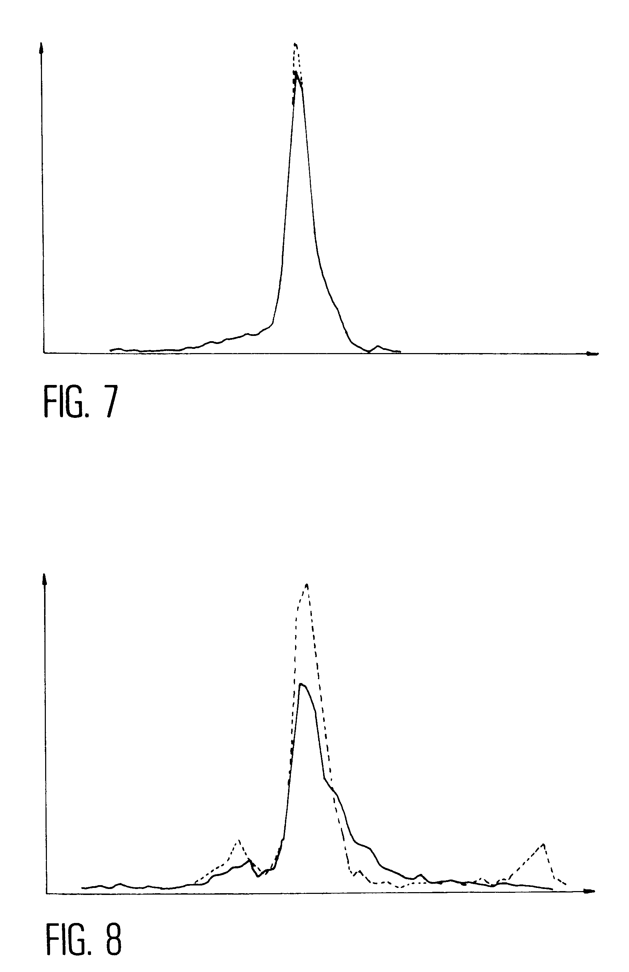

Les figures 7 et 8 montrent des spectres d'énergie (nombre de coups en ordonnées et énergie en abscisses). Sur la figure 7, il s'agit de signaux sans empilement. La courbe en trait plein correspond aux signaux avant filtrage et celle en interrompu aux signaux après filtrage. Ces courbes montrent qu'il n'y a pas de dégradation de la résolution en énergie pour les signaux non empilés.

Sur la figure 8, il s'agit de signaux avec empilement avant filtrage (trait plein) et après filtrage (trait interrompu). On constate une amélioration de la résolution en énergie grâce au filtrage.

Les filtres numériques utilisés dans l'invention peuvent être de tout type connu. On peut utiliser par exemple des filtres du type multiplieurs de matrice comme ceux qui sont commercialisés par la Société TRW sous la référence TMC 2250 ou des filtres à réponse impulsionnelle finie (RIF ou "FIR" en anglais).

## Revendications

1. Appareil de détection nucléaire comprenant des moyens de détection d'un rayonnement nucléaire délivrant des signaux électriques impulsionnels, des moyens de traitement de ces signaux électriques impulsionnels pour déterminer une caractéristique du rayonnement nucléaire reçu, cet appareil étant caractérisé par le fait que les moyens de traitement comprennent un convertisseur analogique-numérique rapide (52-60) capable d'échantillonner chaque impulsion en plusieurs points, suivi d'un moyen de filtrage numérique (62-70) ayant une fonction de transfert qui est sensiblement l'inverse de la fonction de transfert des moyens à l'origine du signal que ce moyen de filtrage reçoit, ce moyen de filtrage étant suivi de moyens d'intégration numérique (72-80) et de moyens (90) pour déterminer ladite caractéristique du rayonnement.

2. Appareil selon la revendication 1, caractérisé par le fait qu'il s'agit d'une gamma caméra, la caractéristique à déterminer étant la position du rayonnement incident.

3. Gamma-caméra selon la revendication 2, caractérisée par le fait qu'elle comprend une couche (3) de matériau scintillateur apte à recevoir un rayonnement gamma et à produire par scintillation (s) un rayonnement lumineux, des moyens de photodétection (6) disposés en regard de la couche de scintillateur et délivrant lesdits signaux électriques, les moyens d'intégration numérique étant suivis d'un circuit (90) de calcul de la position de la scintillation.

4. Gamma caméra selon la revendication 3, caractérisée par le fait que les moyens de traitement comprennent des jeux de résistances de pondération (7) recevant les signaux électriques délivrés par les moyens de photodétection (6) et délivrant quatre signaux électriques $x^+$, $x^-$, $y^+$, $y^-$ de forme impulsionnelle, les deux signaux $x^+$, $x^-$ traduisant la position de la scintillation (s) par rapport à un premier axe X, et les deux signaux $y^+$, $y^-$ traduisant la position de la scintillation (s) par rapport à un second axe Y.

5. Gamma caméra selon la revendication 4, caractérisée par le fait qu'elle comprend quatre convertisseurs analogique-numérique rapides (52, 54, 56, 58) recevant les quatre signaux $x^+$, $x^-$, $y^+$, $y^-$, et en ce que les moyens de filtrage comprennent quatre filtres numériques (62, 64, 66, 68) reliés aux quatre convertisseurs rapides et que le moyen d'intégration comprend quatre intégrateurs numériques (72, 74, 76, 78) reliés aux quatre filtres, ces quatre intégrateurs numériques délivrant quatre sommes pondérées numériques $X_N^+$, $X_N^-$, $Y_N^+$, $Y_N^-$, au circuit de calcul (90).

6. Gamma caméra selon la revendication 3, caractérisée par le fait qu'elle comprend en outre un moyen de visualisation (21) à mémoire d'image (23).

7. Gamma caméra selon la revendication 1, caractérisée par le fait qu'elle comprend en outre :
   - des moyens pour délivrer un signal numérique $e_{(N)}$ représentant l'énergie (e) du rayonnement,
   - un filtre numérique supplémentaire (70) pour recevoir ce signal numérique $e_{(N)}$, ce filtre ayant une fonction de transfert qui est sensiblement l'inverse de la fonction de transfert des moyens ayant formé ce signal,
   - un circuit (71) de détection du maximum du signal délivré par le filtre (70),
- un intégrateur numérique (80) relié au circuit précédent (71) et délivrant un signal ($E_N$) qui est pris comme signal de validation (V) des moyens de calcul numérique (90).

8. Gamma caméra selon la revendication 7, caractérisée par le fait que le circuit (71) de détection du maximum délivre un signal (I) de validation de tous les intégrateurs (72, 74, 76, 78, 80).

9. Gamma caméra selon l'une quelconque des revendications 3 à 8, caractérisée par le fait que les moyens de photodétection sont des photomultiplicateurs.

10. Gamma caméra selon l'une quelconque des revendications 3 à 9, caractérisée par le fait qu'elle comprend en outre un collimateur de rayonnement gamma placé devant la couche (3) de matériau scintillateur.

**Patentansprüche**

1. Kernstrahlungsdetektor, umfassend Einrichtungen zur Detektion einer Kernstrahlung, die elektrische Impulssignale liefern, und Einrichtungen zur Verarbeitung dieser elektrischen Impulssignale, um eine charakteristische Eigenschaft der empfangenen Kernstrahlung zu bestimmen, wobei dieser Detektor durch die Tatsache gekennzeichnet ist, daß die Einrichtungen zur Verarbeitung einen schnellen Analog-Digital-Wandler (52-60) umfassen, der in der Lage ist, jeden Impuls in mehreren Punkten abzutasten, gefolgt von einer Einrichtung zur digitalen Filterung (62-70), die eine Übertragungsfunktion hat, die im wesentlichen die Inverse der Übertragungsfunktion der Einrichtungen am Ursprung des Signals ist, welches diese Einrichtung zur Filterung empfängt, wobei diese Einrichtung zur Filterung gefolgt wird von Einrichtungen zur digitalen Integration (72-80) und von Einrichtungen (90), um die genannte charakteristische Eigenschaft der Strahlung zu bestimmen.

2. Detektor nach Anspruch 1, gekennzeichnet durch die Tatsache, daß es sich um eine Gamma-Kamera handelt, wobei die zu bestimmende charakteristische Eigenschaft der Ausgangspunkt der einfallenden Strahlung ist.

3. Gamma-Kamera nach Anspruch 2, gekennzeichnet durch die Tatsache, daß sie eine Schicht (3) von Szintillatormaterial, das geeignet ist, eine Gamma-Strahlung zu empfangen und durch Szintillation (s) eine Lichtstrahlung zu erzeugen, und Einrichtungen zur Photodetektion (6) umfaßt, die gegenüber der Szintillatorschicht angeordnet sind und genannte elektrische Signale liefern, wobei die Einrichtungen zur digitalen Integration gefolgt werden von einer Schaltung (90) zur Berechnung des Ausgangspunkts der Szintillation.

4. Gamma-Kamera nach Anspruch 3, gekennzeichnet durch die Tatsache, daß die Einrichtungen zur Verarbeitung Sätze von Gewichtungswiderständen (7) umfassen, welche die von den Einrichtungen zur Photodetektion (6) gelieferten elektrischen Signale aufnehmen und welche vier elektrische Signale $x^+$, $x^-$, $y^+$, $y^-$ von Impulsform liefern, wobei die zwei Signale $x^+$, $x^-$ den Ausgangspunkt der Szintillation (s) hinsichtlich einer ersten Achse X wiedergeben und die zwei Signale $y^+$, $y^-$ den Ausgangspunkt der Szintillation (s) hinsichtlich einer zweiten Achse Y wiedergeben.

5. Gamma-Kamera nach Anspruch 4, gekennzeichnet durch die Tatsache, daß sie vier schnelle Analog-Digital-Wandler (52, 54, 56, 58) umfaßt, welche die vier Signale $x^+$, $x^-$, $y^+$, $y^-$ aufnehmen, und dadurch, daß die Einrichtungen zur Filterung vier digitale Filter (62, 64, 66, 68) umfassen, welche an den vier schnellen Wandlern angeschlossen sind, und daß die Einrichtung zur Integration vier digitale Integratoren (72, 74, 76, 78) umfaßt, welche an den vier Filtern angeschlossen sind, wobei diese vier digitalen Integratoren vier gewichtete digitale Summen $X_N^+$, $X_N^-$, $Y_N^+$, $Y_N^-$ an die Rechenschaltung (90) liefen.

6. Gamma-Kamera nach Anspruch 3, gekennzeichnet durch die Tatsache, daß sie ferner eine Einrichtung zur Anzeige (21) mit Bildspeicher (23) umfaßt.

7. Gamma-Kamera nach Anspruch 1, gekennzeichnet durch die Tatsache, daß sie ferner umfaßt:
   - Einrichtungen, um ein digitales Signal $e_{(N)}$ zu liefern, das die Energie (e) der Strahlung darstellt,
   - einen zusätzlichen digitalen Filter (70), um dieses digitale Signal $e_{(N)}$ aufzunehmen, wobei dieser Filter eine Übertragungsfunktion hat, die im wesentlichen die Inverse der Übertragungsfunktion der Einrichtungen ist, die dieses Signal erzeugt haben,
   - eine Schaltung (71) zur Detektion des Maximums des von dem Filter (70) gelieferten Signals,
   - einen digitalen Integrator (80), der an der vorigen Schaltung (71) angeschlossen ist und der ein Signal ($E_N$) liefert, das als Bestätigungssignal (V) für die digitalen Recheneinrichtungen (90) dient.

8. Gamma-Kamera nach Anspruch 7, gekennzeichnet durch die Tatsache, daß die Schaltung (71) zur Detektion des Maximums ein Bestätigungssignal (I) für alle Integratoren (72, 74, 76, 78, 80) liefert.

9. Gamma-Kamera nach einem der Ansprüche 3 bis 8, gekennzeichnet durch die Tatsache, daß die Einrichtungen zur Photodetektion Photomultiplier sind.

10. Gamma-Kamera nach einem der Ansprüche 3 bis 9, gekennzeichnet durch die Tatsache, daß sie ferner einen Kollimator für Gamma-Strahlung umfaßt, der vor die Schicht (3) von Szintillatormaterial gestellt ist.

**Claims**

1. Nuclear detection device including means for detecting a nuclear radiation delivering electric pulse signals, means for processing these electric pulse signals so as to determine a characteristic of the received nuclear radiation, this device being characterized in that the processing means include a fast analog/digital converter (52-60) able to sample each pulse at several points followed by a digital filtering device (62-70) having a transfer function approximately the opposite of the transfer function of the means originating from the signal received by this filtering device, this filtering device being followed by digital integration means (72-80) and means (90) to determine said characteristic of the radiation.

2. Device according to claim 1, characterized in that it concerns a gamma camera, the characteristic to be determined being the position of the incident radiation.

3. Gamma camera according to claim 2, characterized in that it includes a film (3) of a scintillator material able to receive a gamma radiation and to produce by scintillation (s) a luminous radiation, photodetection means (6) disposed opposite the scintillator film and delivering said electric signals, the integration means being followed by a circuit (90) for calculating the position of the scintillation.

4. Gamma camera according to claim 3, characterized in that the processing means includes sets of weighting resistors (7) receiving the electric signals delivered by the photodetection means (6) and delivering four electric pulse signals x+, x-, y+, y-, the two signals x+, x- expressing the position of the scintillation (s) with respect to a first axis X, and the two signals y+, y- expressing the position of the scintillation (s) with respect to a second axis Y.

5. Gamma camera according to claim 4, characterized in that it includes four fast analog/digital converters (52, 54, 56, 58) receiving the four signals x+, x-, y+, y- and wherein the filtering means include four digital filters (62, 64, 66, 68) connected to the four fast converters and wherein the integration device includes four digital integrators (72, 74, 76, 78) connected to the four filters, these four digital integrators delivering four digital weighted sums XN+, XN-, YN+, YN- to the calculation circuit (90).

6. Gamma camera according to claim 3, characterized in that it also includes an image memory (23) display device (21).

7. Gamma camera according to claim 1, characterized in that it further includes:
   - means to deliver a digital signal e(N) representing the energy of the radiation,
   - an additional digital filter (70) for receiving this digital signal e(N), this filter having a transfer function roughly the opposite of the transfer function of the means having formed this signal,
   - a circuit (71) for detecting all the signals delivered by the filter,
   - a digital integrator (80) connected to the preceding circuit (71) and delivering a signal ($E_N$) taken as a signal (V) for validating the digital calculation means (90).

8. Gamma camera according to claim 7, characterized in that the maximum detection circuit (71) delivers a signal (I) for validating all the integrators (72, 74, 76, 78, 80).

9. Gamma camera according to any one of the claims 3 to 8, characterized in that the photodetection means are photomultipliers.

10. Gamma camera according to any one of the claims 3 to 9, characterized in that it further includes a gamma radiation collimator Placed in front of the scintillator material film (3).

# FIG. 1

FIG. 2

FIG. 3

FIG. 4

FIG. 5

EP 0 470 909 B1

FIG. 6

FIG. 7

FIG. 8